Europäisches Patentamt

**European Patent Office**

Office européen des brevets

(19)

(11) Publication number: **0 052 000**
**B1**

(12)

# EUROPEAN PATENT SPECIFICATION

(45) Date of publication of patent specification: **21.01.87**

(21) Application number: **81305300.6**

(22) Date of filing: **06.11.81**

(51) Int. Cl.⁴: **G 02 F 1/137**, G 02 B 5/20, G 02 F 1/01

(54) **Variable colour filters.**

(30) Priority: **10.11.80 US 205660**

(43) Date of publication of application:
**19.05.82 Bulletin 82/20**

(45) Publication of the grant of the patent:
**21.01.87 Bulletin 87/04**

(84) Designated Contracting States:
**CH DE FR GB IT LI NL**

(56) References cited:
**DE-A-2 617 924**
**GB-A-1 469 638**
**US-A-4 017 156**
**US-A-4 019 808**
**US-A-4 097 130**

(73) Proprietor: **POLAROID CORPORATION**
**549 Technology Square**
**Cambridge, Massachusetts 02139 (US)**

(72) Inventor: **Plummer, William Torsch**
**129 Arena Terrace**
**Concord Massachusetts (US)**

(74) Representative: **Lawrence, Peter Robin**
**Broughton et al**
**GILL JENNINGS & EVERY 53-64 Chancery Lane**
**London WC2A 1HN (GB)**

Courier Press, Leamington Spa, England.

# Description

Colour filters are well known in the photographic and optical arts and include devices and materials which deliberately change the spectral intensity distribution and/or state of polarisation of electromagnetic radiation incident upon them for purposes of synthesising colour.

One commonly known class of filter, called an absorption filter, has chemical dyes dissolved in suitable media such as gelatin or plastic selectively to absorb or remove incident radiation of certain wavelengths, either partially or completely, such that the remaining radiation transmitted by the filter is of a desired colour. Other known filters make use of thin coatings or films of various substances to create interference effects to synthesize colour, and they are thus referred to as interference filters. Dichroic filters also are well known being those which selectively absorb radiation polarised in one direction more strongly than that polarised in other directions.

Also well known are materials, such as ammonium dihydrogen phosphate (ADP) and potassium dihydrogen phosphate (KDP), which become optically active in the presence of external magnetic and electric fields. Such materials have been variously combined with plane polarisers and dichroic polarizing filters to provide multicolour filter devices which are capable of producing more than one colour in response to an applied electrical or magnetic field.

US Patent No. 2,493,200 discloses a colour filter corresponding to the precharacterising part of present claim 1. It combines a plurality of dichroic polarisers, a plane polariser, and a plurality of Kerr cells comprising ADP which are arranged to operate as fractional wave retardation plates.

Another example is U.S. Patent No. 4,068,926 where there is disclosed a twisted nematic liquid crystal cell sandwiched between an achromatic linear polariser and a coloured linear polariser. This combination is arranged to display coloured patterns having light-on-coloured or coloured-on-light image-background combinations.

A further example of the use of the properties of ADP materials operating as fractional wave retardation plates in combination with polarisers is described in U.S. Patent No. 2,834,254.

A mechanically operable variable colour filter comprising composite chromatic polarising components, an achromatic polarising filter, and a quarter-wave retardation plate is described in U.S. Patent No. 3,936,147.

In U.S. Patent No. 3,994,565 two sources of coloured light, linearly polarised in different planes, are combined with a liquid crystal having a twisted nematic configuration to display characters on differently coloured backgrounds.

An arrangement for a dichroic polariser, a liquid crystal, a plane polariser, and a mirror configured as a coloured display is described in U.S. Patent 4,025,164.

In U.S. Patent No. 2,586,635 there is described a colour filter comprising a combination of a plane polariser, polarised colour filters and birefringent polarisation rotators.

In an article entitled "New Multicolour Liquid Crystal Displays That Use A Twisted Nematic Electrooptical Cell" by Terry J. Scheffer, which appeared in the Journal of Applied Physics, vol. 44, No. 11, in November 1973, there are described two- and four-colour displays which utilise polarisers, liquid crystals, and optical retardation plates.

US—A—4019808 discloses a filter for varying the spectral composition of visible light comprising a plurality of optical elements stationed along the optical path of the light, including a plurality of colour selective dye polarising elements, and polarisation angle varying means. In this prior art the dye polarising elements are pleochroic elements which comprise transparent crystals in which light viewed from different angles is seen in different colours. One of the problems encountered with this device is that unless a diffusion plate is interposed between the viewer and the so-called polychrome display an observer has to be placed along the optical axis in order to be able to view the intended colour.

A further problem with the prior art filters is that cross-talk between colours can occur.

It is clear from these examples of multi-colour filter devices that much effort has been devoted to the synthesis of colour. This invention relates to novel filters for modifying the spectral composition of radiant energy.

A filter according to the invention for varying the spectral composition comprises a plurality of optical elements including a plurality of different dichroic polarisers each of the dichroic polarisers being structured for selectively plane polarising a different part of the visible spectrum while transmitting the remainder of the visible spectrum unpolarised, at least one angle varying means associated with each of the dichroic polarisers for selectively varying the angle of the plane of polarisation of the linearly polarised light, and a plane polariser for polarising substantially uniformly all wavelengths of the visible spectrum stationed along the optical path of the light and is characterised in that the optical elements are arranged along the optical path in the following order: a magenta dichroic polariser, at least one angle varying means, the plane polariser, at least one angle varying means, a cyan dichroic polariser, at least one angle varying means, and a yellow dichroic polariser wherein the dichroic polarisers and the plane polariser are oriented with their polarising transmission axes sequentially at angular increments of 90° azimuth so as to modify the spectral content of visible light incident on the filter whereby the filter transmits any one of a predetermined number of colours whose saturation and hue are related to the operation of the angle varying means.

By the invention it is possible to vary continuously the spectral composition of radiant energy to provide any one of a gamut of coloured light, the filter preferably being an electro-optical filter. In particular by the invention it is possible to provide improved colour saturation and hue control through the use of plane polarisers, dichroic polarisers and polarisation rotators in the order specified. This is because by placing the magenta polariser first, the remaining two polarisers have the greatest possible lack of overlap and cross-talk is minimised.

The problem mentioned in connection with US—A—4019808 is overcome since each one of the dichroic polarising elements is responsible for one of the primary colours so that, depending on the state of energisation of any one of the angle varying means, any colour at all is visible regardless of the location of the observer.

The filter of the invention comprises a plurality of differently coloured dye polarising elements stationed along an optical path to intercept light travelling therealong. Each dichroic polariser includes means for plane polarising part of the visible spectrum and for transmitting the remainder of the visible spectrum unpolarised.

Additionally included is a plane polariser which is also stationed along the optical path and polarises substantially uniformly all wavelengths of the visible spectrum. The filter also includes a plurality of means for varying the rotation of linearly polarised light generally from 0° to 90°. The means may comprise twisted nematic liquid crystals stationed along the optical path and connected to selectively variable voltage sources that provide angles of light transmissivity variable generally between 0° and 90° in accordance with the voltage applied. Generally there is just one such crystal or other angle varying means associated with each dichroic polariser but there may be more than one. Thus for instance one of the dichroic polarisers may be associated with two of the crystals, generally arranged together for varying the rotation of linearly polarised light from 0 to 180° and the other dichroic polarisers may each then be associated with just one crystal or other angle varying means.

The liquid crystals may be constructed so that the filter selectively transmits the chosen colour in alphanumeric form.

Preferably each twisted nematic liquid crystal is arranged to cause a 90° rotation of the plane of polarisation for the entire spectrum when not energised and when fully energised to transmit plane polarised light without rotation.

Instead of using liquid crystals, rotatably mounted half-wave plates may be used.

Two examples of the invention are now described by reference to the accompanying drawings in which:—

Figure 1 is an exploded perspective view of one example of a colour filter of the invention;

Figures 2, 3 and 4 are graphs showing spectral transmission characteristics of various components of the filter of Figure 1;

Figure 5 is a side elevation of the colour filter of Figure 1 shown in combination with a reflector;

Figure 6 is a plane view showing a modification that can be made to the filter of Figure 1 to display numeric characters; and

Fig. 7 is an exploded diagrammatic perspective of an alternate filter arrangement having elements in common with the filter of Fig. 1.

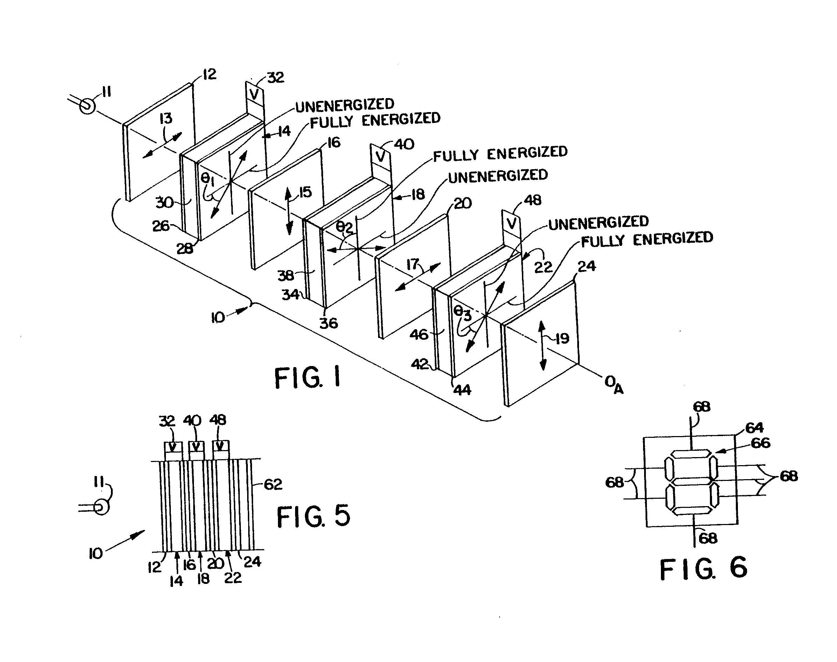

Referring to Figure 1 the filter 10 operates to vary selectively the spectral composition of visible light from a radiant source 11 to transmit a predetermined number of colours of different saturation and hue. To accomplish this, the preferred structure of the filter 10 comprises, from left to right along an optical axis OA, a magenta dye polariser 12, a first liquid crystal cell 14, an ordinary linear or plane polariser 16, a second liquid crystal cell 18, a cyan dye polariser 20, a third liquid crystal cell 22, and a yellow dye polariser 24.

The dye polarisers 12, 20 and 24 preferably each comprise a stretched polyvinyl alcohol sheet treated with an absorbing dye so that each dye polariser absorbs a different part of the visible spectrum and plane polarises that part of the visible spectrum which is absorbed by the dye while transmitting the nonabsorbed part of the visible spectrum unpolarised. The dye polarisers 12, 20 and 24 may be fabricated, and dyes for them selected, in the manner described in U.S. Patents Nos. 2,328,219 and 4,025,164.

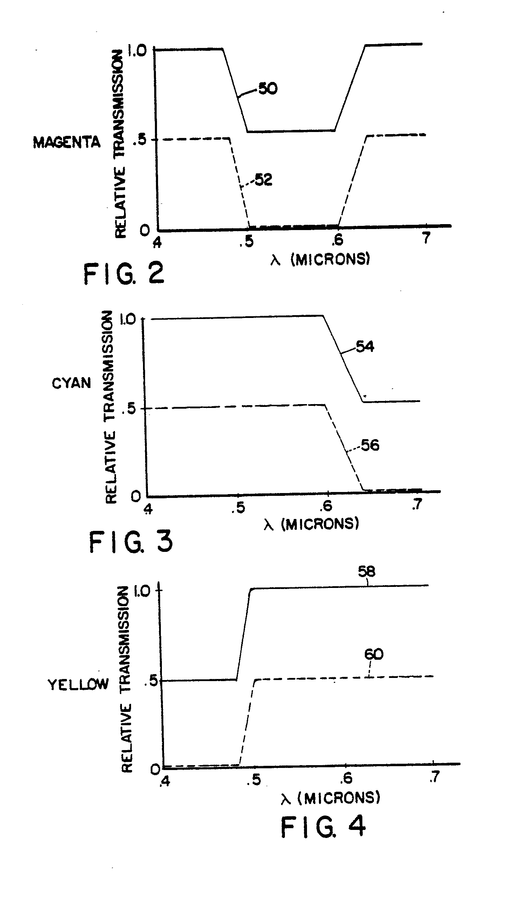

The preferred relative transmission characteristics of the dye polarisers 12, 20 and 24 are represented by the curves 50, 54 and 58 in Figures 2, 3 and 4, respectively. The relative transmission characteristics for each dye polariser represents the shape of the absorbed spectra for the particular dye incorporated. Absolute transmission characteristics which may be desired for a particular application can be easily controlled in a well known manner through the use of appropriate dye concentration levels.

The dye polariser 12 is preferably provided with a magenta dye and plane polarises green light (approximately .5 to .6 μm) while transmitting blue light (approximately .4 to .5 μm) and red light (approximately .6 to .7 μm) unpolarised. The transmission axis 13 of the dye polariser 12 is preferably arranged horizontally so that green light is polarised in a plane parallel to the transmission axis 13.

The dye polariser 20 is provided with a cyan dye and plane polarises and absorbs red light while transmitting blue and green light unpolarised. The transmission axis 17 of the dye polariser 20 is also arranged horizontally and therefore red light is polarised thereby in a plane which is both parallel to the transmission axis 17 and also to the transmission axis 13 of the dye polariser 12.

The dye polariser 24 is provided with a yellow dye and absorbs and plane polarises blue light while transmitting, unpolarised, green and red light. The transmission axis 19 of the dye polariser 24 is arranged vertically so that blue light polarised thereby exits the dye polariser 24 in a plane which is parallel to its transmission axis 19.

The plane polariser 16 operates in a well known manner to plane polarise substantially uniformly all wavelengths of the visible spectrum. The transmission axis 15 of the plane polariser 16 is arranged vertically. Thus arranged, the dye polarisers 12, 20 and 24 and the plane polariser 16 are positioned with respect to one another with their polarising transmission axes at angular increments of 90-degrees azimuth.

The liquid crystal cells 14, 18, 22, are of the twisted nematic type described in an article authored by M. Schadt and W. Helfrich which appeared in the *Applied Physics Letters*, vol. 19, No. 4, 15 February 1971, and entitled "Voltage-Dependent Optical Activity Of A Twisted Nematic Liquid Crystal". Each liquid crystal cell 14, 18, 22, comprises a suitable nematic liquid crystal material placed between two glass plates each of which is provided with a conductive coating. In Fig. 1, the liquid crystal material for the cell 14 is designated at 30 and its glass plates with appropriate conductive control layers thereon are designated at 26 and 28; the liquid crystal material for the cell 18 is designated at 38 while its glass plates with conductive coatings thereon are designated at 34 and 36; and the liquid crystal material for the cell 22 is designated at 46 while its glass plates with conductive coatings thereon are designated at 42 and 44. The liquid crystal cells, 14, 18 and 22, operate in the manner described in the aforementioned article to vary the rotation of linearly polarised light continuously from 0-degrees to 90-degrees in accordance with the voltage applied across their respective conducting layers. The required voltages can be applied to the respective conductive coatings of the liquid crystal cells, 14, 18 and 22, by well known variable voltage sources 32, 40 and 48.

Each of the liquid crystal cells, 14, 18 and 22, is arranged to cause a 90-degree rotation of the axis of polarisation for the entire spectrum when not energised and when fully energised to transmit plane polarised light without rotation. For voltages less than a predetermined level which represents the fully-energised state, plane polarised light incident upon any of the liquid crystal cells, 14, 18, 22, is rotated through an angle less than 90-degrees as designated respectively at $\theta1$, $\theta2$, and $\theta3$. The angles $\theta_1$, $\theta_2$ and $\theta_3$ depend on the voltage applied to the respective liquid crystals cells, 14, 18 and 22.

Each of the dye polarisers 12, 20 and 24, is arranged in the foregoing manner with respect to the plane polariser 16 so that any one of the dye polarisers (12, 20 or 24), in combination with the plane polariser 16 transmits the entire visible spectrum when the plane in which the light is polarised by the dye polariser is parallel to the transmission axis of the plane polariser 16 and transmits its designated colour, i.e. magenta, cyan and yellow, by absorbing the complement thereof when the plane in which the light is polarised by the dye polariser is crossed, i.e. rotated by the angles, $\theta_1$, $\theta_2$ and $\theta_3$ through the liquid crystal cells, 14, 18 and 22, with the transmission axis of the plane polariser 16.

The curve 52 in Fig. 2 represents the colour transmitted by the magenta dye polariser 12 when crossed with the plane polariser 16 through the fully energised liquid cell 14; the curve 56 of Fig. 3 represents the colour transmitted by the cyan dye polariser 20 when crossed with the plane polariser 16 through the fully energised liquid crystal cell 18; and the curve 60 of Fig. 4 represents the colour transmitted by the yellow dye polariser 24 when crossed with the plane polariser 16 through the fully energised liquid crystal cell 22.

When the liquid crystal cells 14, 18 and 22 are not energised, their respective control layers each cause a 90-degree rotation of the axis of polarisation for the entire spectrum. For this condition, the magenta filter 12 is thus optically parallel to the transmission axis of the plane polariser 16 and only partially absorbs green light. The cyan dye polariser 20 is optically parallel to the transmission axis of the plane polariser 16 and only partially absorbs red light because all three colours emerge from plane polariser 16 parallel to its axis 15 and are then rotated by 90-degrees by the liquid crystal cell 40 so that they are parallel to the transmission axis 17 of the cyan dye polariser 20. The yellow dye polariser 24 is optically parallel to the transmission axis of the plane polariser 16 and only partially absorbs blue light because all three colours emerge from the cyan dye polariser 20 parallel to its transmission axis 17 and are then rotated by 90-degrees by the liquid crystal cell 22 so that they are parallel to the transmission axis 19 of the dye polariser 24. However, when each of the liquid crystal cells 14, 18 and 22 is fully energised as illustrated in Fig. 1, the liquid crystal material loses its "twist" and each of the cells, 14, 18 and 22, passes polarised light without rotation. Thus, when all three liquid crystal cells 14, 18 and 22 are fully energised, the magenta dye polariser 12 and the cyan dye polariser 20 in combination with the plane polariser 16 will absorb green and red light and take on the transmission characteristics specified by the curves 52 and 56 in Figs. 2 and 3; but the yellow dye polariser 24 is still optically parallel to the plane polariser 16 because there are two 90-degree rotations between them. Thus, the result of all three liquid crystal cells 14, 18 and 22 being fully energised is the colour blue. The colours which result from all eight possible conditions of fully energised and unenergised states for the three liquid crystal cells, 14, 18 and 22 are summarised in Table 1 as follows:—

TABLE 1

| Liquid Crystal Cell | | | |
|---|---|---|---|
| 14 | 18 | 22 | COLOUR |
| OFF | OFF | OFF | White |
| OFF | OFF | ON | Yellow |
| OFF | ON | OFF | Green |
| OFF | ON | ON | Cyan |
| ON | OFF | OFF | Magenta |
| ON | OFF | ON | Red |
| ON | ON | OFF | Black |
| ON | ON | ON | Blue |

The filter 10 in addition to providing the colours listed in Table 1 can create any colour display which is within the dye gamut offered by the dye polarisers 12, 20, and 24. These other colours can be achieved by applying to the liquid crystal control cells 14, 18 and 22 appropriate voltage levels which are below the predetermined level of their fully energised state. The angles through which plane polarised light is rotated depend on the voltage applied to the liquid crystal cells 14, 18 and 22 and are designated respectively as θ1, θ2 and θ3. Given that the three angles of rotation are designated by θ1, θ2 and θ3, then the red, green and blue transmissions for the filter 10 are as follows:

$$T_{green}=sin^2\theta1$$

$$T_{red}=sin^2\theta2$$

$$T_{blue}=sin^2(\theta2+\theta3).$$

To provide full and continuous adjustment of $T_{blue}$ from 0 to 100% transmission, θ3 must have a range of 180° rather than 90°. This may be accomplished by replacing the liquid crystal cell 22 with a pair of such cells in tandem each of which rotates plane polarised light through 90°. With such a tandem cell in place of the cell 22, the colours listed in Table 1 would still be available through the use of two appropriate voltage levels for the tandem cell to provide a 0° or 90° rotation.

The filter 10 has the magenta dye polariser 12 on one side of the plane polariser 16 because its absorption is central in the visible spectrum. With this arrangement, the cyan dye polariser 20 and the yellow dye polariser 24, which are together on the opposite side of the plane polariser 16, have the greatest possible lack of overlap of their spectral absorption characteristics.

The dye polarisers 12, 20 and 24, the plane polariser 16, and the twisted nematic liquid crystal cells 14, 18 and 22 have been arranged along the optical path, OA, of the filter 10 in a predetermined manner to modify the spectral content of visible light incident on the filter 10 so that the filter 10 transmits any one of a predetermined number of colours the saturation and hue of which are related to the voltages applied to the twisted nematic liquid crystal cells 14, 18 and 22.

The present invention operates in a manner similar to a subtractive colour mixing system in that the different amounts of dye in the colour mixing system are simulated by the aforementioned polarisation changes. Colour saturation is controlled by how much the liquid crystal cells, 14, 18 and 22, are rotated, and hue is controlled by which dye polarisers, 12, 20 and 24, are crossed with linear polariser 16. What is most significant about the colour filter 10 is that it can be used to adjust both saturation and hue over a substantial range.

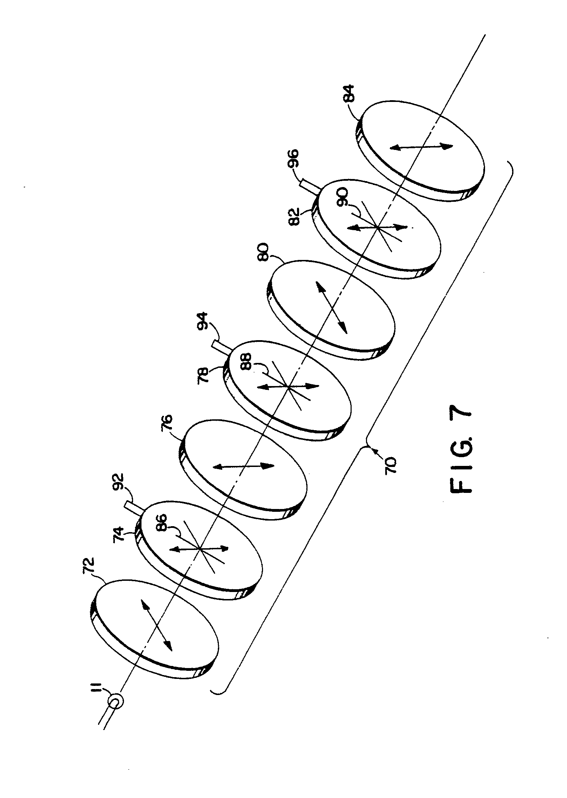

In Fig. 5, there is shown the preferred embodiment of the filter 10 of the invention in combination with a mirror 62 placed to the right of the yellow dye polariser 24. By adding the mirror 62, the filter 10 may be used in a reflection mode because light reflected from the mirror 62 is treated in the same manner after having been reflected off the mirror 62 as if it were light transmitted through the filter 10 by the source 11. The net effect on the colour of light reflected from the mirror 62 is the same as if the source 11 were in place of the mirror 62.

The filter 10 may be modified in a well known manner to transmit alphanumeric information in colour. This can be accomplished as illustrated in Fig. 6 by arranging the conductive layer in the form of a well known seven-segment pattern designated at 66 on a glass plate of a liquid crystal cell such as that designated at 64. Different areas of the pattern 66 can be individually controlled through a plurality of leads 68 which can be selectively actuated in an appropriate manner by well known electronic devices. The pattern 66 or similar alphanumeric pattern can be placed in each of the plates of the liquid crystal cells, 14, 18 and 22, in alignment with one another along the optical axis, OA, and selectively actuated in the manner previously described.

Referring now to Fig. 7, there is shown at 70 an alternate embodiment for the preferred arrangement of tye dye polarisers and plane polarisers of the invention. In the filter 70, the magenta dye polariser is designated at 72, the plane polariser at 76, the cyan dye polariser at 80 and the yellow dye polariser at 84—all arranged as previously described with respect to the preferred embodiment of the invention. Between the magenta dye polariser 72 and the plane polariser 76 is placed a well known halfwave plate 74 which can be manually rotated through the use of an appropriate handle 92; between the plane polarisers 76 and the cyan dye polariser 80 is placed another halfwave plate which is designated at 78 and includes a handle 94 for manual rotation thereof; and between the cyan dye polariser 80 and the yellow dye polariser 84 is a third halfwave plate which is designated at 82 and includes a handle 96 for manual rotation thereof. Halfwave plates such as those designated at 74, 78 and 82 operate to convert linearly polarised light into linearly polarised light with a different azimuth. Moreover, if either the fast axis or the mutually perpendicular slow axis of a halfwave plate is aligned with plane polarised light, the plane polarised light passes through the halfwave plate unchanged. However, when the fast or slow axis of a halfwave plate is misaligned with the plane of polarisation of plane polarised light, then the halfwave plate rotates the angle of polarisation by an amount which is twice the angle between the planes of the plane polarised light and the plane of the fast or slow axis of tha halfwave plate. The fast axes of the halfwave plates 74, 78 and 82 are designated in Fig. 7 at 86, 88, and 90, respectively and are arranged to operate in the manner of the liquid crystal cells in the preferred embodiment of the invention when in their unenergised state. Manual rotation of the halfwave plates (92, 94, 96) creates the same effect in the filter 70 as did the liquid crystal cells of the filter 10.

## Claims

1. A filter for varying the spectral composition of visible light, the filter comprising a plurality of optical elements (12, 14, 16, 18, 20, 22, 24) including a plurality of different dichroic polarisers (12, 20, 24) each of the dichroic polarisers being structured for selectively plane polarising a different part of the visible spectrum while transmitting the remainder of the visible spectrum unpolarised, at least one angle varying means associated with each of the dichroic polarisers for selectively varying the angle of the plane of polarisation of the linearly polarised light, and a plane polariser (16) for polarising substantially uniformly all wavelengths of the visible spectrum stationed along the optical path ($O_A$) of the light, characterised in that the optical elements are arranged along the optical path in the following order: a magenta dichroic polariser (12), at least one angle varying means (14), the plane polariser (16), at least one angle varying means (18), a cyan dichroic polariser (20), at least one angle varying means (22), and a yellow dichroic polariser (24) wherein the dichroic polarisers (12, 20, 24) and the plane polariser (16) are oriented with their polarising transmission axes sequentially at angular increments of 90° azimuth so as to modify the spectral content of visible light incident on the filter whereby the filter transmits any one of a predetermined number of colours whose saturation and hue are related to the operation of the angle varying means.

2. A filter according to claim 1, wherein each of the angle varying means (14, 18, 22) is arranged to cause a 90° rotation of the axis of polarisation for the entire spectrum when not energised and when fully energised to transmit plane polarised light without rotation.

3. A filter according to any of the preceding claims, additionally including a mirror (62) arranged on one side thereof so that light transmitted through the filter is intercepted by the mirror and reflected thereby, whereby at least a portion of the light incident on the mirror is retroreflected thereby back through the filter.

4. A filter according to any of the preceding claims, wherein each angle varying means (14, 18, 22) comprises a voltage responsive twisted nematic liquid crystal element, the twisted nematic liquid crystal elements being structured for varying the angle through which the polarisation of linearly polarised light is rotated in accordance with the voltage applied thereto.

5. A filter according to claim 4, wherein the twisted nematic liquid crystal elements (14, 18, 22) are structured so that the filter can selectively transmit the predetermined number of colours in alphanumeric form.

6. A filter according to claim 4 or claim 5, characterised in that each twisted nematic crystal element (14, 18, 22) provides angles of polarisation rotation variable within the range from 0 to 90° in accordance with the voltage applied.

7. A filter according to any of claims 4 to 6, wherein the twisted nematic liquid crystal elements (14, 18, 22) are structure for rotating the polarisation of light between either one of two planes the azimuths of which are separated by 90° from one another, in response to the application of a voltage.

8. A filter according to any of claims 4 to 7, wherein the predetermined number of colours which can be defined does not exceed the maximum possible combination of voltage states for the liquid crystals.

## Patentansprüche

1. Filter zur Veränderung der spektralen Zusammensetzung sichtbaren Lichtes, wobei das Filter folgende Bestandteile aufweist: eine Mehrzahl optischer Elemente (12, 14, 16, 18, 20, 22, 24) einschließlich mehrerer unterschiedlicher dichroitischer Polarisatoren (12, 20, 24), wobei jeder der dichroitischen Polarisatoren so ausgebildet ist, daß selektiv ein unterschiedlicher Teil des sichtbaren Spektrums eben polarisiert wird, während der Rest des sichtbaren Spektrums unpolarisiert verbleibt, wenigstens eine den Winkel verändernde Vorrichtung, die jedem dichroitischen Polarisator zugeordnet ist, um selektiv den Winkel der Polarisationsebene des linear polarisierten Lichtes zu ändern und einen ebenen Polarisator (16), der längs des optischen Pfades ($O_A$) des Lichtes angeordnet ist, um sämtliche Wellenlängen des sichtbaren Spektrums im wesentlichen gleichförmig zu polarisieren,

dadurch gekennzeichnet, daß die optischen Elemente längs des optischen Pfades in der folgenden Ordnung angeordnet sind: ein dichroitischer Magenta-Polarisator (12), wenigstens eine Winkeleinstell - Vorrichtung (14), der ebene Polarisator (16), wenigstens eine Winkeleinstellvorrichtung (18), ein dichroitischer Cyan-Polarisator (20), wenigstens eine Winkeleinstellvorrichtung (22) und ein dichroitischer Gelb-Polarisator (24), wobei die dichroitischen Polarisatoren (12, 20, 24) und der ebene Polarisator (16) mit ihren Polarisations-Durchlaßachsen aufeinanderfolgend mit winkel-Vergrößerungen von 90° Azimut so angeordnet sind, daß der Spektralgehalt des sichtbaren auf das Filter auftreffenden Lichts verändert wird, so daß das Filter irgend eine einer vorbestimmten Zahl von Farben durchläßt, deren Sättigung und Farbwert auf die Arbeitsweise der Winkeleinstellvorrichtungen abgestimmt ist.

2. Filter nach Anspruch 1, bei welchem jede Winkeleinstellvorrichtung (14, 18, 22) so angeordnet ist, daß eine 90°-Drehung der Polarisationsachse für das gesamte Spektrum erfolgt, wenn keine Erregung stattfindet und bei voller Erregung eben polarisiertes Licht ohne Drehung durchgelassen wird.

3. Filter nach einem der vorhergehenden Ansprüche, das außerdem einen Spiegel (62) aufweist, der auf einer Seite derart angeordnet ist, daß das durch das Filter hindurchgetretene Licht durch den Spiegel abgefangen und hierdurch derart reflektiert wird, daß wenigstens ein Teil des auf den Spiegel einfallenden Lichtes durch das Filter zurückreflektiert wird.

4. Filter nach einem der vorhergehenden Ansprüche, bei welchem jede Winkeleinstellvorrichtung (14, 18, 22) ein auf Spannung ansprechendes, verdrilltes, nematisches Flüssigkristallelement aufweist, wobei die verdrillten, nematischen Flüssigkristallelemente so ausgebildet sind, daß der Winkel geändert wird, um den die Polarisation des linear polarisierten Lichtes gemäß der angelegten Spannung gedreht wird.

5. Filter nach Anspruch 4, bei welchem die verdrillten, nematischen Flüssigkristallelemente (14, 18, 22) so ausgebildet sind, daß das Filter selektiv die vorbestimmte Zahl von Farben in alphanumerischer Form durchlassen kann.

6. Filter nach Anspruch 4 oder 5, dadurch gekennzeichnet, daß jedes verdrillte, nematische Kristallelement (14, 18, 22) eine Drehung von Polarisationswinkeln bewirkt, einstellbar in dem Bereich zwischen 0 und 90° gemäß der angelegten Spannung.

7. Filter nach einem der Ansprüche 4 bis 6, bei welchem die verdrillten, nematischen Flüssigkristallelemente (14, 18, 22) so ausgebildet sind, daß die Polarisation des Lichtes gemäß der angelegten Spannung zwischen zwei Ebenen gedreht wird, deren Azimut um 90° voneinander getrennt ist.

8. Filter nach einem der Ansprüche 4 bis 7, bei welchem die vorbestimmte Zahl von Farben, die definiert werden kann, nicht die maximal mögliche Kombination von Spannungszuständen für die Flüssigkristalle überschreitet.

## Revendications

1. Filtre pour faire varier la composition spectrale d'une lumière visible, le filtre comprenant une pluralité d'éléments optiques (12, 14, 16, 18, 20, 22, 24), comprenant une pluralité de polariseurs dichroïques différents (12, 20, 24) chacun des polariseurs dichroïques étant structuré pour polariser sélectivement dans un plan une partie différente du spectre visible tout en transmettant le reste du spectre visible non polarisé, au moins un moyen de variation d'angle associé à chacun des polariseurs dichroïques pour faire varier de façon sélective l'angle du plan de polarisation de la lumière linéairement polarisée, et un polariseur plan (16) pour polariser de façon sensiblement uniforme toutes les longueurs d'ondes du spectre visible, placés le long du trajet optique $(O_A)$ de la lumière, caractérisé par le fait que les éléments optiques sont disposés le long du trajet optique dans l'ordre suivant: un polariseur dichroïque magenta (12), au moins un moyen de variation d'angle (14), le polariseur plan (16), au moins un moyen de variation d'angle (18), un polariseur dichroïque cyan (20), au moins un moyen de variation d'angle (22), et un polariseur dichroïque jaune (24), les polariseurs dichroïques (12, 20, 24) et le polariseur plan (16) étant orientés avec leurs axes de transmission polarisants séquentiellement décalés par des incréments angulaires de 90° en azimuth afin de modifier la teneur spectrale de la lumière visible arrivant sur le filtre de sorte que le filtre transmette l'une quelconque parmi un nombre prédéterminé de couleurs dont la saturation et la teinte sont liées au fonctionnement des moyens pour faire varier l'angle.

2. Filtre selon la revendication 1, dans lequel chacun des moyens de variation d'angle (14, 18, 22) est disposé de façon à provoquer une rotation de 90° de l'axe de polarisation de la totalité du spectre lorsqu'il n'est pas excité et pour transmettre la lumière plane polarisée sans rotation lorsqu'il est complètement excité.

3. Filtre selon l'une quelconque des revendications précédentes comprenant en plus un miroir (62) disposé d'un côté de ce filtre afin que la lumière transmise à travers le filtre soit interceptée par le miroir et réfléchie par ce dernier, de façon qu'au moins une portion de la lumière tombant sur le miroir soit réfléchie ainsi à travers la filtre.

4. Filtre selon l'une quelconque des revendications précédentes, dans lequel chaque moyen de variation d'angle (14, 18, 22) comprend un élément à cristal liquid nématique en hélice, répondant à une tension, les éléments à cristaux liquides nématiques en hélice étant structurés pour faire varier l'angle dont la polarisation de la lumière linéairement polarisée a tourné en fonction de la tension qui leur est appliquée.

5. Filtre selon la revendication 4, dans lequel les éléments à cristaux liquides nématiques en hélice (14, 18, 22) sont structurés de façon que le filtre puisse transmettre de façon sélective le nombre prédéterminé de couleurs sous forme alphanumérique.

6. Filtre selon la revendication 4 ou la revendication 5, caractérisé en ce que chacun des éléments à cristaux nématiques en hélice (14, 18, 22) introduit des angles de rotation de polarisation variables dans la gamme comprise entre 0 et 90° en fonction de la tension qui lui est appliquée.

7. Filtre selon l'une quelconque des revendications 4 à 6, dans lequel les éléments à cristaux liquides nématiques en hélice (14, 18, 22) sont structurés pour faire tourner la polarisation de la lumière entre l'un ou l'autre de deux plans dont les azimuths sont distants de 90° l'un de l'autre, en réponse à l'application d'une tension.

8. Filtre selon l'une quelconque des revendications 4 à 7, dans lequel le nombre prédéterminé des couleurs qui peuvent être définies n'excède par la combinaison maximale possible d'états de tension des cristaux liquides.

**FIG. 1**

UNENERGIZED
FULLY ENERGIZED

FULLY ENERGIZED
UNENERGIZED

UNENERGIZED
FULLY ENERGIZED

**FIG. 5**

**FIG. 6**

FIG. 2

FIG. 3

FIG. 4

FIG. 7

0 052 000